# EUROPEAN PATENT SPECIFICATION

(11) **EP 2 515 010 B1**
(45) Date of publication and mention of the grant of the patent: **28.09.2016**
(21) Application number: 11163562.9
(22) Date of filing: 21.04.2011
(51) Int. Cl.: F16J 1/14, F16J 7/00, F16C 9/06

(54) **Small end bushing, piston and bushing-piston-system**
Kleine Endbuchse, Kolben und Buchsen-Kolben-System
Traversée à extrémité réduite, piston et système de traversée/piston

(43) Date of publication of application: 24.10.2012
(73) Proprietor: Caterpillar Motoren GmbH & Co. KG, 24159 Kiel (DE)
(72) Inventor: Borchardt, Jan, 24105 Kiel (DE)
(74) Representative: BRP Renaud & Partner mbB Rechtsanwälte Patentanwälte Steuerberater

(56) References cited:
- DE-A1- 3 614 532
- DE-A1- 4 034 804
- DE-A1-102005 061 898
- DE-C1- 3 342 528
- US-A- 4 873 951
- US-A- 4 909 638
- US-A1- 2008 115 621

## Description

### Technical Field

The present disclosure generally refers to combustion engines, in particular medium to large combustion engines, having a piston mounted on a small end of a connecting rod.

### Background

A combustion engine has a connecting rod for transforming a linear movement of a piston into a rotational movement of a crank shaft. The connecting rod has a big end and a small end. The small end has a small end eye in which a bushing is inserted. The piston is mounted to the small end of the connecting rod by inserting a piston pin through a piston boss formed in the piston and the small end bushing. The bushing has bushing end surfaces. Similarly, the piston has contact surfaces opposite to the bushing end surfaces as exemplarily disclosed in US 7,810,411 B2. During operation of the combustion engine, the connecting rod is driven around an axis of the piston pin. A movement of the connecting rod in the axial direction of the piston pin is limited by the piston's contact surfaces. Accordingly, a running wear occurs along a running wear zone where the bushing end surfaces and the inner piston surfaces contact each other.

A piston mounted to a small end of a connecting rod is further known from DE 33 42 528 C1.

The present disclosure is directed, at least in part, to improving or overcoming one or more aspects of prior systems.

### Summary of the Disclosure

According to one aspect of the present disclosure, a bushing having a middle axis and adapted for being inserted in an axial direction into a small end eye of a connecting rod may comprise a first bushing end surface at a first axial end of the bushing, the first bushing end surface forming at least one protrusion extending in the direction of the middle axis and defining a contact region at the first axial end of the bushing adapted for contacting, in the mounted state, a first contact surface of a piston, wherein the first protrusion is azimuthally arranged such that the protrusion defines a local maximum of the width of the bushing within an azimuthal angular range, the bushing having a constant minimal width in the azimuthal angular range, except for the protrusion.

According to another aspect of the present disclosure, a connecting rod-piston system of a combustion engine may comprise at least one pair of opposing surfaces, whereby one of the opposing surfaces may be a surface of the connecting rod or a small end bushing being disposed in a small end eye of the connecting rod and the other one may be a surface of a piston mounted to the connecting rod, one of the surfaces of the connecting rod or the small end bushing forming at least one protrusion adapted for defining a contact region between the connecting rod or the small end bushing and the piston, wherein the at least one protrusion is azimuthally arranged such that the protrusion defines a local maximum of the width of the connecting rod or the bushing within an azimuthal angular range, the bushing having a constant minimal width in the azimuthal angular range, except for the protrusion.

The following advantages may apply to bushings and connecting rod-piston systems as disclosed herein.

A connecting rod-piston-system comprising a connecting rod or a bushing being provided with at least one protrusion as described above may enforce a defined contact zone between at least one of the bushing end surfaces or the small end and the inner surface of the piston when the connecting rod is operated and moved around an axial axis of a piston pin inserted into the small end bushing or the small end eye. Thus, a running wear (wear and tear) may occur at the defined contact zone and, hence, at a known and reproducible position along the circumference of the bushing end surfaces or the small end and/or the inner surfaces of the piston. Further, the region where the running wear occurs may be easily and reliably lubricated and/or coated for reducing the running wear. Consequently, life-time of the bushing and/or the piston may be increased and prolonged, respectively.

Other features and aspects of this disclosure will be apparent from the following description and the accompanying drawings.

### Brief Description of the Drawings

Fig. 1 is a perspective view of a connecting rod having a piston mounted thereon;
Fig. 2 is a partial cross-sectional view of the connecting rod of Fig. 1;
Fig. 3 is a perspective view of a small end bushing;
Fig. 4 is a cross-sectional view of the small end of the connecting rod and the piston of Fig. 1;
Fig. 5 is a schematic top view of a first embodiment of the small end bushing and the piston;
Fig. 6 is a schematic top view of a further embodiment of the small end bushing and the piston.
Fig. 7 is a schematic illustration of a first embodiment of the piston and a small end bushing, not forming part of the present invention; and
Fig. 8 is a schematic illustration of a further embodiment of the piston and a small end bushing, not forming part of the present invention.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure refers to a connecting rod and a piston to be used in a combustion engine. In particular, the present disclosure refers to a connecting rod having a small end which may be provided with a small end eye and a small end bushing inserted into the small end eye. Further, the present disclosure refers to a piston which may have an inner body. A through hole forming a piston boss and an opening perpendicular to the through hole may be provided in the inner body. The small end may be inserted into the opening of the piston and mounted to the piston by using a piston pin inserted into the small end bushing and the piston boss to generate a form closure. In the assembled state, a narrow nominal clearance may exist between the end surfaces of the bushing and the surface of the opening of the piston. During operation of the combustion engine, the connecting rod may be axially guided within the piston by the piston pin and may move to drive the crankshaft by oscillating and driving, respectively, around an axis of the piston pin.

The present disclosure may be based on the realization that, additionally to the oscillating movement of the connecting rod, a displacement of the connecting rod along the piston pin axis and/or a tilt around an axis perpendicular to the piston pin axis may occur. The displacement and tilt, respectively, may cause a running wear between the end surfaces of the small end bushing and the surface of the opening of the piston.

Herein, new configurations for small end bushings and pistons (the pistons do not form part of the present invention) are disclosed that allow a prediction of the region or location where the running wear on one of the bushing end surfaces and/or the surface of the piston opening will occur. Accordingly, new configurations for small end bushings and pistons are disclosed that may generate a controlled abrasive wear on a specific abrasive region. In addition, the specific abrasive region may be selectively coated and/or lubricated in order to reduce the abrasive wear in this region and, hence, to enhance the life time of the small end bushing and/or the piston.

For example, a small end bushing having specifically shaped bushing end surfaces which, when assembled to and used within a piston, promotes a controlled abrasive wear zone and allows specific coating and/or lubrication of this abrasive wear zone is disclosed.

Similarly, a piston having a specifically shaped inner surface which, when assembled to the small end of a connecting rod, promotes a controlled abrasive wear zone and allows specific coating and/or lubrication of this abrasive wear zone is disclosed.

Moreover, the present disclosure discloses a bushing-piston-system of a combustion engine with a connecting rod comprising a small end bushing and/or a piston at least one of which may be configured to promote a controlled abrasive wear zone and, e.g., additionally may allow specific coatings and/or lubrication of the abrasive wear zone.

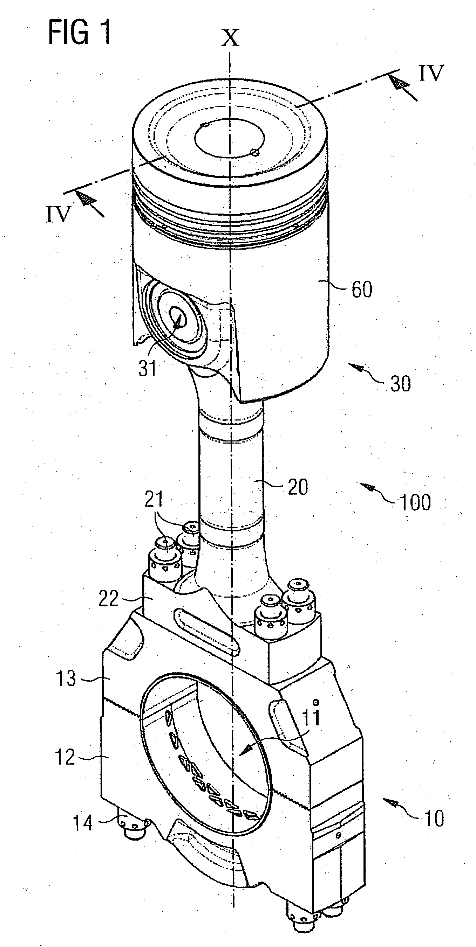

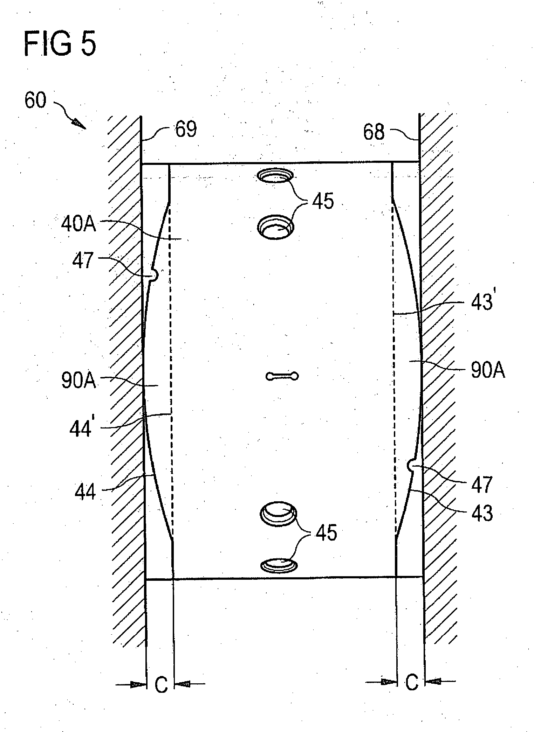

In the following, the use of a bushing at the small end is described in connection with Figs. 1 to 4. Figs. 5 and 6 and Figs. 7 and 8 illustrate exemplary embodiments of a small end bushing and a piston, respectively, with specifically shaped surfaces for a controlled interaction with the respective opposing surfaces.

In the present disclosure, the term "width" refers to the extension of the bushing in its longitudinal direction, e.g., an extension from a first bushing end surface and a second bushing end surface.

Further, in the present disclosure, the term "adapted to be" has the same meaning as "configured to be".

Further, in the present disclosure, the term "azimuthal angle" (also referred to as azimuth) defines the angle-coordinate in a cylindrical coordinate system. The cylindrical coordinate system has one cartesian coordinate (z-axis) and two polar coordinates (r, θ), the two polar coordinates spanning a plane orthogonal to the z-axis and the azimuthal angle having its angular point located on the z-axis (i.e., the symmetry axis of the cylinder). Accordingly, the term "an azimutally localized protrusion" refers to a protrusion being arranged within a certain angular range of the azimuthal angle. With respect to the bushing, the term "azimuthal angle" refers to an angle between two points along the circumference of the small end bushing, the angular point of the azimuth being located at the center of the circular cross section of the small end bushing.

Fig. 1 shows a connecting rod 100 of a combustion engine (not shown) having a piston 60 mounted thereon. Connecting rod 100 may have a big end 10, a connecting rod shank 20, and a small end 30. Connecting rod shank 20 may be disposed between big end 10 and small end 30. Big end 10 may be adapted to be mounted to a crank shaft (not shown). Small end 30 may be adapted to be mounted to piston 60. A longitudinal axis X of connecting rod 100 extends from big end 10 to small end 30.

Big end 10 may have a big end eye 11 which may have a circular shape, but may also have any other suitable shape for being connected to the crank shaft. Big end 10 may consist of a first big end part 12 and a second big end part 13. Big end parts 12, 13 may be connected by fastening means 14 such as screws or bolts.

Connecting rod shank 20 may have a rod like shape with a substantially constant cross section such as a circular cross section. Connecting rod shank 20 may have a broadened portion 22 at its one end facing towards big end 10. Broadened portion 22 is adapted to be connected to big end 10 by fastening means 21 such as screws or bolts running through broadened portion 22 in direction of axis X.

Small end 30 may have a small end eye 31 which may have a circular shape, but may also have any other suitable shape for being connected to piston 60. Small end 30 may be formed integrally with connecting rod shank 20.

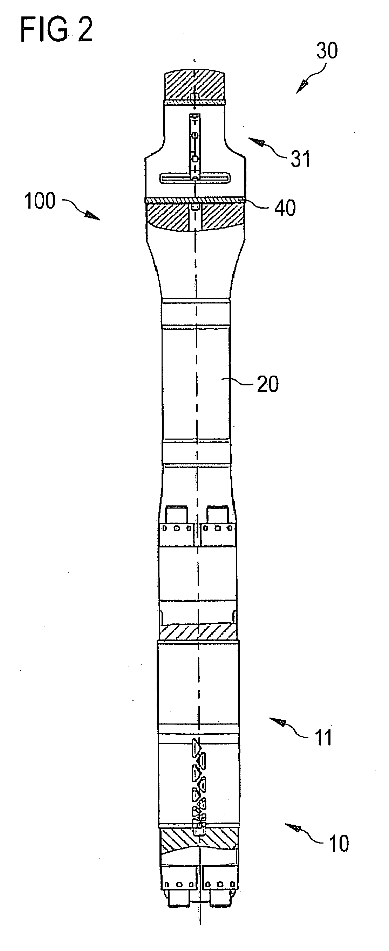

To illustrate small end 30, Fig. 2 shows a partial cross sectional view of connecting rod 100. In particular, Fig. 2 shows a cross sectional view of big end 10 and small end 30 and a side view of connecting rod shank 20. As shown in Fig. 2, a small end bushing 40 may be inserted into small end 30. At both ends, small end bushing 40 may extend beyond connecting rod 100 in the longitudinal and axial direction, respectively, of small end bushing 40, e.g., by 1 mm.

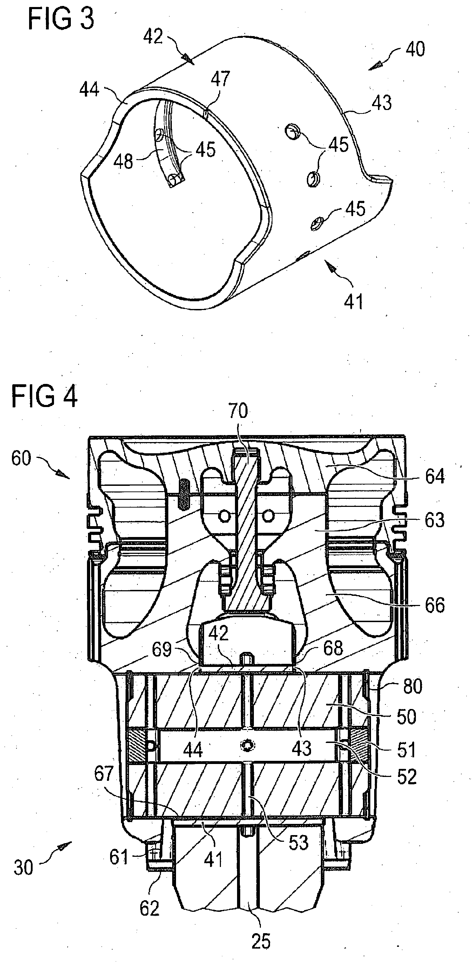

Fig. 3 shows a perspective view of small end bushing 40. Small end bushing 40 may have a circular cross section and may have a lower bushing portion 41 which may extend along one half of the circumference of the small end bushing 40 and an upper bushing portion 42 which may extend along the other half of the circumference of the small end bushing 40. The terms "lower" and "upper" may refer to the assembled state of small end bushing in piston 60 and the combustion engine. In the assembled state, lower bushing portion 41 may face towards a crank shaft side and upper bushing portion may face towards a piston side. Herein, the extension of small end bushing 40 in the longitudinal direction of small end bushing 40 is referred to as the width of small end bushing 40. The width of lower bushing portion 41 may be larger than the width of the upper bushing portion 42. More specifically, upper bushing portion 42 may have a constant width up to the transition from upper bushing portion 41 to lower bushing portion 42, where the width of small end bushing 40 may enlarge and broaden to a constant but larger width than upper bushing portion 42. The transition from upper bushing portion 42 to lower bushing portion 41 may be, for example, linear or curved.

Small end bushing 40 may further have a first bushing end surface 43 and a second bushing end surface 44. First bushing end surface 43 and second bushing end surface 44 of upper bushing portion 42 may have at least one groove 47 arranged in radial direction of small end bushing 40. As for the preferred arrangement of groove 47 on bushing end surfaces 43, 44, it is referred to further below.

Further, small end bushing 40 may have a plurality of through holes 45. Through holes 45 may be arranged between first bushing end surface 43 and second bushing end surface 44 at the region of the transition from upper bushing portion 42 to lower bushing portion 41 and may be spaced equally. Small end bushing 40 may further have an internal circumferential groove 48 extending along inner surface of small end bushing 40 in a circumferential direction. In particular, groove 48 may be arranged such that through holes 45 end in groove 48.

Fig. 4 shows a cross sectional view of small end 30 of Fig. 1 to illustrate how piston 60 is mounted onto connecting rod 100.

Piston 60 may comprise a piston crown 64 and a piston skirt 63, which are connected by a screw 70 along a longitudinal axis of piston 60 corresponding to longitudinal axis X of connecting rod 100 shown in Fig. 1. Piston skirt 63 may include an inner body 66. Inner body 66 may have a through hole 67 extending in a lateral direction, which is perpendicular to longitudinal axis X through inner body 66. Through hole 67 may form a piston boss. Further, inner body 66 may have an opening 61 extending towards piston crown 64 from a lower surface 62 of piston 60. In assembled state, lower piston surface 62 face towards the crank shaft side.

Small end 30 of connecting rod 100 may be inserted in opening 61 such that small end bushing 40 may be aligned with through hole 67 and bushing end surfaces 43, 44 may be disposed within inner body 66 of piston 60 with a narrow nominal clearance (not shown in Fig. 4) there between. Herein, the surface of inner body 66 being opposed to first bushing end surface 43 is referred to as a first contact surface 68 and the surface of inner body 66 being opposed to second bushing end surface 44 is referred to as a second contact surface 69.

A piston pin 50 may be inserted through the piston boss and small end bushing 40. Piston pin 50 may attach connecting rod 100 to piston 60. Piston pin 50 may be axially fixed to piston 60 by fixing means 80 such as locking rings arranged at both ends of piston pin 50 in its axial direction. Piston pin 50 may have a longitudinal pin oil channel 52 disposed in the axial direction of piston pin 50 and may have four radial pin oil channels 53 extending from the longitudinal pin oil channel 52 to the outer surface of piston pin 50, that is, in a radial direction of piston pin 50. Longitudinal pin oil channel 52 may be sealed at both ends by sealings 51 and may be in connection with a shank oil channel 25 disposed within connecting rod 100 via radial pin oil channels 53 as well as internal groove 48 and through holes 45 of small end bushing 40, for providing lubricant to the contact surface between small end eye 31 and small end bushing 40 and the contact surface between small end bushing 40 and piston pin 50.

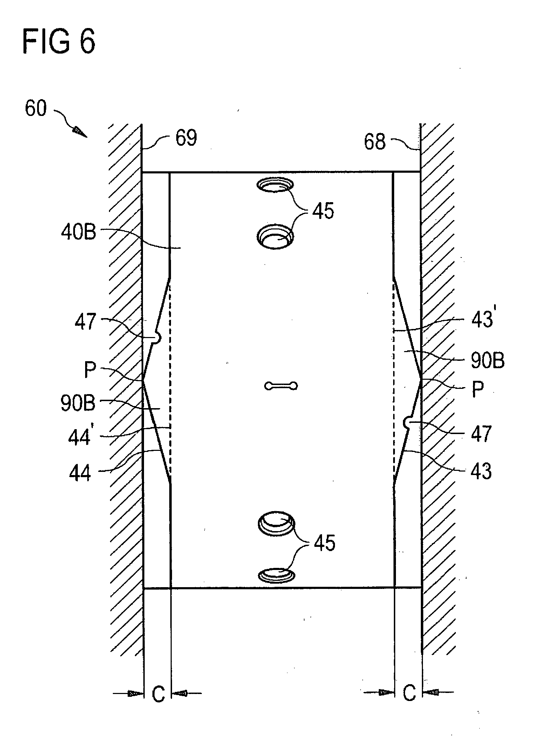

Figs. 5 and 6 show schematic top views of exemplary embodiments of small end bushing 40.

Fig. 5 shows a first embodiment of a small end bushing 40A. In Fig. 5, each of first and second bushing end surfaces 43, 44 of small end bushing 40A may have a portion extending and protruding, respectively, in the axial direction of small end bushing 40. Herein, portion may be referred to as protrusion 90A. In Fig. 5, protrusion 90A may be a curved protrusion 90A of convex shape extending to the right and to the left, respectively.

Protrusion 90A may be integrally or non-integrally (e.g. by welding, bonding, etc.) formed with small end bushing 40A and may form bushing end surfaces 43, 44 so as to form a nose, ridge or the like. In other words, protrusion 90A may be a portion, region or section of small end bushing 40A which may project in an axial direction, e.g. in Fig. 5, in a direction perpendicular to a plane in which bushing end surface 43, 44 extends.

Referring to Fig. 3, bushing end surfaces 43, 44 are in general essentially parallel to each other in the upper section as well in the lower section, the sections being connected by a smooth transition. Due to protrusion 90A, bushing end surfaces 43, 44 may no longer be parallel in some regions of the upper section of bushing end surfaces 43, 44. For example, end surfaces 43, 44 may have regions opposing each other in axial direction of small end bushing 40A, which may have different distances there between.

Protrusion 90A may have its maximal extension in width direction of small end bushing 40A at the position closest to piston crown 64. As shown in Fig. 3, the uppermost position of upper bushing portion 42 may be arranged at midway and the half, respectively, of the circumferential extension of upper bushing portion 42. The shape of curved protrusion 90A may be spherical, e.g. spherically fall along the circumference of small end bushing 40A from its maximal extension to a certain width of upper bushing portion 42. The protrusion may extend up to e.g. 50 µm to 100 µm from an assumed bushing end surface 43', 44' (not having the protrusion and, hence, corresponding to the basic shape of bushing end surfaces 43, 44), e.g., protrusion 90A may have an extension in axial direction of small end bushing of e.g. 50 µm to 100 µm from the assumed bushing end surface 43', 44'.

In the embodiment shown in Fig. 5, piston 60 may have parallel contact surfaces 68, 69 (schematically shown in a cross sectional view), that is, contact surfaces 68, 69 may be without any protrusions. A nominal clearance C such as e.g. 0.8 mm may be provided between protrusion. 90A and the opposing one of each of contact surfaces 68, 69 of piston 60.

At least one groove 47 may be located on or next to protrusions 90A for lubricating first and/or second bushing end surfaces 43, 44. An exemplary arrangement of grooves 47 is shown in Fig. 5. Grooves 47 on first bushing end surface 43 may be arranged point-symmetrically to grooves 47 on second bushing end surface 44, the axis perpendicular to the axial axis of small end bushing 40A being the symmetry axis, which extends in the up-and-down-direction as shown in Fig. 5.

Fig. 6 shows an embodiment of a small end bushing 40B that differs from the embodiment shown in Fig. 5 in the shape of protrusion 90A. In particular, in the embodiment shown in Fig. 6, each of first and second bushing end surfaces 43, 44 of small end bushing 40B may have an obtuse angled protrusion 90B. More particularly, protrusion 90B may be formed of two plane surfaces extending linear from assumed first or second bushing end surface 43', 44', meeting each other at a point P under an obtuse angle. Of course, the plane surfaces of protrusion 90B may also meet under a right angle or an acute angle and may not be plane, but may be arcuated or wavelike. As shown in Fig. 5, at least one groove 47 may be located on or next to protrusion 90B for lubricating first and/or second bushing end surfaces 43, 44.

Although Figs. 5 and 6 show a single protrusion 90A, 90B on each of bushing end surfaces 43, 44, only one bushing end surface 43, 44 may be provided with protrusion 90A, 90B. Further, although Figs. 5 and 6 show one protrusion 90A, 90B on each of first end second bushing end surface 43, 44, a plurality of protrusions 90A, 90B may be provided on at least one of first or second bushing end surfaces 43, 44. Furthermore, although Figs. 5 and 6 show protrusions 90A, 90B on upper bushing portion 42, at least one protrusion 90A, 90B may also be provided on at least one of first or second bushing end surfaces 43, 44 of lower bushing portion 41.

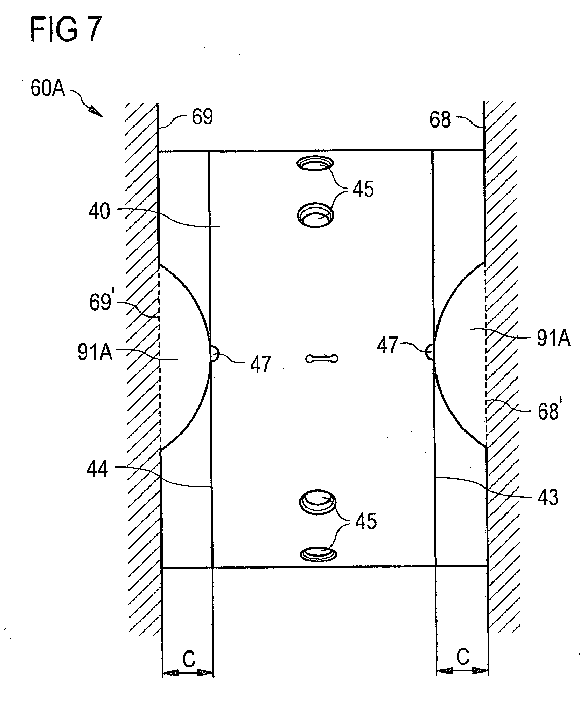

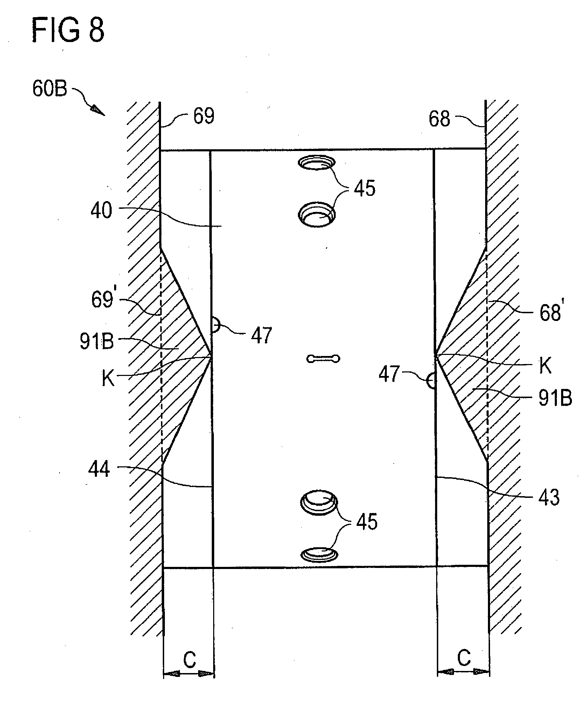

In principal, a protrusion having a similar effect to a protrusion of a bushing may, in addition or alternatively, also be provided at the piston's contact surfaces 68, 69. In principle, the shapes and configurations may be similar to the protrusion disclosed for the bushing. As examples, Figs. 7 and 8 show schematic top views of exemplary embodiments of contact surfaces as it may be provided on a piston mountable to connecting rod 100.

Fig. 7 shows a first embodiment of a piston 60A in a cross-sectional view not forming part of the present invention. In the embodiment shown in Fig. 7, each of first and second contact surfaces 68, 69 may have a portion extending and protruding, respectively, transverse to the longitudinal axis X. As in the embodiments shown in Figs. 5 and 6, the portion may be referred to as a protrusion 91A. In Fig. 7, protrusion 91A may be a curved protrusion 91A of convex shape extending to the right and to the left, respectively.

Protrusion 91A may be integrally or non-integrally (e.g. by welding, bonding, etc.) formed with piston 60A and may form contact surfaces 68, 69 so as to form a nose, ridge or the like. In other words, protrusion 91A may be a portion, region or section of piston inner body 66 which may project in a direction, e.g. in Fig. 7, in a direction perpendicular to a plane in which assumed contact surfaces 68', 69' (not having the protrusion and, hence, corresponding to basic shape of contact surfaces 68, 69) extends. Due to protrusion 91A, contact surfaces 68, 69 may be no longer parallel in some regions. For example, contact surfaces 68, 69 may have points opposing each other in a direction transverse to longitudinal axis X, which may have different distances there between.

Protrusion 91A may be arranged at a position on contact surfaces 68, 69 which opposes the position on bushing end surfaces 43, 44 which is closest to the piston crown 64. As shown in Fig. 3, the uppermost position of upper bushing portion 42 may be arranged at midway and the half, respectively, of the circumferential extension of upper bushing portion 42. In the embodiment shown in Fig. 7, small end bushing 40 (shown in a top view) may have parallel first and second bushing end surfaces 43, 44, e.g., without any protrusions. In assembled state, a narrow nominal clearance C may be provided between curved protrusion 91A and the corresponding one of first and second bushing end surfaces 43, 44. Clearance C may be about e.g. 0.8 mm.

At least one groove 47 may be located next to protrusions 91A on first and/or second bushing end surfaces 43, 44 for lubricating first and second contact surfaces 68, 69. An exemplary arrangement of grooves 47 compared to the example shown in Figs. 5 and 6 is shown in Fig. 7. Grooves 47 on first bushing end surface 43 may be arranged axial-symmetrically to grooves 47 on second bushing end surface 44, the axis perpendicular to the axial axis of bushing 40 being the symmetry axis which extends in the up-and-down-direction as shown in Fig. 7.

Fig. 8 shows an embodiment of a piston 60B that differs from the embodiment shown in Fig. 7 in the shape of the protrusion 91A. In particular, in the embodiment shown in Fig. 8, each of first and second contact surfaces 68, 69 of piston 60 may have one obtuse angled protrusion 91B. More particularly, protrusion 91 B may be formed of two plane surfaces extending linear from assumed contact surfaces 68', 69', meeting each other at a point K under an obtuse angle. Of course, the surfaces of protrusion 91B may also encompass a right angle or an acute angle and may not be plane, but may be arcuated or wavelike. As shown in Fig. 8, at least one groove 47 may be located on first and/or second bushing end surfaces 43, 44 for lubricating first and second contact surfaces 68, 69.

Although Figs. 7 and 8 show protrusions 91A, 91B on first and second contact surfaces 68, 69, only one of first and second contact surfaces 68, 69 may be provided with a curved protrusion 91A, 91B. Further, although Figs. 7 and 8 show one protrusion 91A, 91B on each of first and second contact surfaces 68, 69, a plurality of protrusions 91 A, 91B may be provided on at least one of first and second contact surfaces 68, 69. Furthermore, although Figs. 7 and 8 show protrusions 91A, 91B on contact surfaces 68, 69 opposing upper bushing portion 42, at least one protrusion 91A, 91B may also be provided on at least one of contact surfaces 68, 69 opposing lower bushing portion 41.

Protrusions 90A, 90B, 91A, 91B may extend over an angular range of less than 180° along the circumference of first and second bushing end surfaces 43, 44 or first and second contact surfaces 68, 69. Preferably, the angular range may be about less than 30°, 60°, 90°, 120° and 150° and may, especially, range between 45° and 90° along the circumference of first and second bushing end surfaces 43, 44 or first and second contact surfaces 68, 69. Herein, the angular range may also be referred to as "azimuthal angular range".

Although not shown in Figs. 5 to 8, protrusions 90A, 90B, 91A, 91B may be provided both on bushing end surfaces 43, 44 and on contact surfaces 68, 69. In particular, for example, one of bushing end surfaces 43, 44 may be provided with one or more of protrusions 90A, 90B, 91A, 91B, while the one of contact surfaces 68, 69 opposing the one of bushing end surfaces 43, 44 with the protrusion is not provided with a protrusion, and the other one of contact surfaces 68, 69 opposing the other one of bushing end surfaces 43, 44 may be provided with one or more of protrusions 90A, 90B, 91A, 91B, while the other one of bushing end surfaces 43, 44 may not be provided with a protrusion.

Although small end 30 of connecting rod 100 shown in Figs. 1 to 4 has a stepped shape, the above disclosure may, for example, also be applied to connecting rods having a small end with a trapezoidal shape or with constant width. Protrusions for a controlled abrasion may be provided similarly to end surfaces of bushings used with those types of small ends.

### Industrial Applicability

During operation of the engine, connecting rod 100 may move and oscillate, respectively, around piston pin axis and may be displaced along the piston pin axis. To reduce friction between small end bushing 40 and small end eyes 31, lubricant such as oil may be fed through oil channel 25 to the outer surfaces of small end bushing 40. Further, to reduce friction between piston pin 50 and small end bushing 40, the lubricant fed through shank oil channel 25 to outer surface of small end bushing 40 may be further supplied to the outer surface of piston pin 50 via through holes 45 and groove 48. As, at both ends, small end bushing 40 extends beyond connecting rod 100 in the longitudinal direction of small end bushing 40, end surfaces 43, 44 of small end bushing 40 and not connecting rod 100 may contact the inner surface of piston 60 during operation what may generate a running wear between bushing end surfaces 43, 44 and inner surface of piston 60, especially, contact surfaces 68, 69. A running wear especially may occur when the small end bushing and the piston are made of steel. However, running wear may also occur in case the small end bushing and/or the piston are made of other materials than steel such as aluminum.

Figs. 5 and 6 show exemplary embodiments of small end bushing 40 having non-parallel first and second bushing end surfaces 43, 44. In particular, the embodiments shown in Figs. 5 and 6, may have protrusions 90A, 90B on first and second bushing end surfaces 43, 44. Due to protrusions 90A, 90B, small end bushing 40 may have a configuration with which an abrasive wear-extending over the entire contact zone between first or second end surfaces 43, 44 and the inner surface of piston 60 may be prevented. In particular, if connecting rod 100 is displaced along piston pin axis or tilted around an axis perpendicular to piston pin axis, the at least one protrusion 90A, 90B and not the entire surface of bushing end surfaces 43, 44 may come in contact with first or second contact surface 68, 69. As a result, a small contact zone may be defined between the at least one protrusion 90A, 90B and the one of first and second contact surfaces 68, 69.

Figs. 7 and 8 show exemplary embodiments of piston 60 having also a configuration with which an abrasive wear extending over the entire surface between first or second end surfaces 43, 44 and the inner surface of piston 60 may be prevented. In particular, first and second contact surfaces 68, 69 opposing first and second bushing end surfaces 43, 44 may be non-parallel in that at least one protrusion 91A, 91B may be provided on first or second contact surface 68, 69. Accordingly, if connecting rod 100 is displaced along piston pin axis or tilted around an axis perpendicular to piston pin axis, one of first or second bushing end surfaces 43, 44 may come in contact with the at least one protrusion 91 A, 91 B and not with the entire surface of first or second contact surface 68, 69. As a result, a small contact zone may be defined and generated, respectively, between the one of first and second bushing end surfaces 43, 44 and the at least one protrusion 91A, 91B.

The embodiments shown in Figs. 5 to 8 disclose configurations of small end bushing 40 and piston 60 which may prevent an undefined/ unpredictable contact zone between first and second end surfaces 43, 44 and first and second contact surfaces 68, 69. Rather, the embodiments shown in Figs. 5 to 8, disclose configurations of small end bushing 40 and piston 60 which, during operation of connecting rod 100, may enforce a small contact zone between first and second end surfaces 43, 44 and first and second contact surfaces 68, 69 and, thus, a controlled abrasive, wear of a specific abrasive region on bushing end surfaces 43, 44 and on contact surfaces 68, 69. Therefore, the embodiments of small end bushing 40 and piston 60 shown in Figs. 5 to 8 may prevent abrasive wear occurring at unpredictable positions along an undefined contact zone between first and second end surfaces 43, 44 and first and second contact surfaces 68, 69.

During operation of connecting rod 100, protrusions 90A, 90B, 91A, 91B may be abraded due to friction between protrusion 90A, 90B, 91A, 91B and the corresponding opposing surface 43, 44, 68, 69. In particular, independent on the initial shape of the protrusion 90A, 90B, 91A, 91B, protrusions 90A, 90B, 91A, 91B may be continuously flattened. Due to the flattening; the contact zone between protrusions 90A, 90B, 91A, 91B and the corresponding one of opposing surfaces 43, 44, 68, 69 may enlarge and, with increasing flattening of protrusions 90A, 90B, 91A, 91B, also running wear may increase. The enlargement of the contact zone between protrusions 90A, 90B, 91A, 91B and the corresponding opposing surfaces 43, 44, 68, 69 may be delayed or reduced by lubricating and/or coating protrusions 90A, 90B, 91A, 91B and/or opposing surfaces 43, 44, 68, 69. For instance, protrusions 90A, 90B, 91A, 91 B and/or opposing surfaces 43, 44, 68, 69 may be provided with a galvanic coating or a plastic based coating having good sliding properties such as silicone or boron nitride based coatings. E.g., the coating may be provided on first and/or second bushing end surfaces 43, 44 and/or first and/or second contact surfaces 68, 69 contacting protrusions 90A, 90B, 91A, 91B. Additionally or alternatively, the small contact zone may be lubricated. More particularly, the lubricant fed through oil channel 25 to the outer surface of small end bushing 40 may be supplied via the outer surface of small end bushing 40 to the at least one groove 47. To allow a reliable and selective lubrication of protrusions 90A, 90B, 91A, 91B, groove 47 may be arranged on or at least next to protrusions 90A, 90B, 91A, 91B.

With the above-described configuration, it is not necessary to coat or lubricate the complete first and second bushing end surfaces 43, 44 and/or the complete contact surfaces 68, 69, because coating and lubrication can be selectively and, thereby, more efficiently supplied to protrusions 90A, 90B, 91A, 91 B what saves costs going along with coating and lubrication.

As a result, the life-time of small end bushing 40 and piston 60 may be increased.

Accordingly, in an aspect of the present disclosure, small end bushing 40 of connecting rod 100 may comprise a first bushing end surface 43, 44 having a ring like shape and a second bushing end surface 43, 44 having a ring-like shape. At least one of first and second bushing end surfaces 43, 44 may have a protrusion 90A, 90B. Protrusion 90A, 90B may extend from first and/or the second bushing end surfaces 43, 44 such that small end bushing 40 may be enlarged in its width/axial direction. That is, small end bushing 40 may comprise first and second ring-shaped bushing end surfaces 43, 44 disposed perpendicularly to its axial direction. The extension of small end bushing 40 in axial direction of bushing 40 may increase at least from a first position on one of the first or second bushing end surfaces 43, 44 to a second position on the one of the first or second bushing end surfaces 43, 44 such that first and/or second bushing end surfaces 43, 44 protrude more in the axial direction at the second than at the first position.

In some embodiments, small end bushing 40 according to the first aspect may further comprise an upper bushing portion 42 facing away from a connecting rod shank 20 of the connecting rod 100 when mounted to the connecting rod 100, the at least one protrusion 90A, 90B being provided at the upper bushing portion 42.

In some embodiments, protrusion 90A, 90B of small end bushing 40 may have a curved shape.

In some embodiments, protrusion 90A, 90B of small end bushing 40 may have an angled shape, e.g. an angle of at least 30°, 60°, 90°, 120° or 150°.

In some embodiments, protrusion 90A, 90B of small end bushing 40 may have a coating, such as a galvanic coating or a plastic-based coating.

In some embodiments, at least one of the first or second bushing end surfaces 43, 44 may have at least one lubrication groove 47 extending in a radial direction of the small end bushing 40 and may be adapted for supplying lubricant to the protrusion 90A, 90B.

In some embodiments, upper bushing portion 42 may have a larger width than the lower bushing portion 41.

Additionally, according to a further aspect of the present disclosure, piston 60 may comprise an inner body 66 having an opening 61 extending from a lower piston surface 62 towards a piston crown 64, opening 61 having an inner surface defining a first contact surface 68 and a second contact surface 69 adapted for contacting small end bushing 40 in a mounted state. Contact surfaces 68, 69 may have at least one protrusion 91A, 91B. Protrusion 91 A, 91B may extend from first and/or second contact surfaces 68, 69 such that the dimensions of opening 61 in piston 60 are reduced. That is, piston 60 may comprise inner body 66 having first contact surface 68 direction seconde contact surface 69 and opposing first contact surface 68. First and second contact surfaces 68, 69 may increase at least from a first to a second position on the inner surface of piston 60 such that first and second contact surfaces 68, 69 protrude more towards the interior of piston 60 at the second than at the first position.

In some embodiments, at least one protrusion 91 A, 91B of piston 60 may be provided at a portion of the contact surfaces 68, 69 adapted for contacting an upper bushing portion 42 facing away from a connecting rod shank 20 of the connecting rod 100 when mounted to the connecting rod 100.

In some embodiments, protrusion 91A,-91B of piston 60 may have a curved shape.

In some embodiments, protrusion 91A, 91B of piston 60 may have an angled shape, e.g. an angle of at least 30°, 60°, 90°, 120° or 150°.

In some embodiments, protrusion 91A, 91B of piston 60 may have a coating, such as a galvanic coating or a plastic-based coating.

According to the above described aspect of the present disclosure, a bushing for inserting in an axial direction into a small end eye of a connecting rod may comprise a first bushing end surface connecting an inner surface and an outer surface of the bushing at a first axial end of the bushing, wherein a section of the first bushing end surface may form a first protrusion for providing a defined azimuthally localized contact region at the first axial end of the bushing.

Thus, in the above described embodiments of the bushing, the first protrusion may be azimuthally arranged such that the protrusion may define a local maximum of the width of the bushing within an azimuthal angular range, the bushing having a constant, for instance a minimal, width in the azimuthal angular range, except for the protrusion.

Further, the bushing may comprise a second bushing end surface connecting the inner surface and the outer surface of the bushing at a second axial end of the bushing being opposite to the first axial end, wherein a section of the second bushing end surface may form a second protrusion for providing a defined azimuthally localized contact region at the second axial end of the bushing.

Additionally, the bushing may comprise at least one lubrication groove extending in a radial direction on the first bushing end surface and/or the second bushing end surface.

Moreover, the width of the bushing may be constant or may vary at least partially along the circumference of the bushing, such that the bushing may have a trapezoidal shape with a continuously changing width of the bushing, a stepped shape with an abruptly changing of the width of the bushing or a shape having a constant width along the entire circumference.

According to the other above described aspect of the present disclosure, a piston for being mounted to a small end of a connecting rod may comprise an inner body having a first contact surface that may be, in the mounted state, opposed to a first surface of the small end or of a bushing inserted into a small end eye of the small end, wherein a section of the first contact surface may form a protrusion for providing a defined azimuthally localized contact region for contacting the small end or the bushing.

Furthermore, in the above described embodiments of the piston, the inner body of the piston may have, additionally to the first contact surface, a second contact surface that is, in the mounted state, opposed to a second surface of the small end or the bushing, wherein a section of the second contact surface may form a second protrusion for providing a defined azimuthally localized contact region for contacting the small end or the bushing.

Accordingly, in a connecting rod-piston-system, the protrusion of the bushing or the piston may extend over an azimuthal angular range of less than 180°, e.g. less than 160°, 140°, 120°, 100°, 80°, 60°, 40°, 20°, or 10°, and preferably between 45° and 90°.

At least one of the protrusions of the bushing or the piston may protrude from an assumed surface not having the protrusion for at least 50 µm.

At least one of the protrusions of the bushing or the piston may protrude from the assumed surface not having the protrusion for less than 100 µm.

At least one of the protrusions of the bushing or the piston may have a curved shape.

At least one of the protrusions of the bushing or the piston may have an angled shape, e.g. an angle of at least 30°, 60°, 90°, 120° or 150°.

At least one of the protrusions may have a coating, such as a galvanic coating or a plastic-based coating.

Consequently, the connecting rod-piston system may have a piston and/or a bushing as described above-with-respect to-the-aspects and embodiments concerning the bushing and/or the piston.

Although the preferred embodiments of this invention have been described herein, improvements and modifications may be incorporated without departing from the scope of the following claims.

## Claims

1. A bushing (40, 40A, 40B) having a middle axis and adapted for being inserted in an axial direction into a small end eye (31) of a connecting rod (100), the bushing (40, 40A, 40B) comprising:
a first bushing end surface (43) at a first axial end of the bushing (40, 40A, 40B), **characterised by**
the first bushing end surface (43) forming at least one protrusion (90A, 90B) extending in the direction of the middle axis and defining a contact region at the first axial end of the bushing (40, 40A, 40B) adapted for contacting, in the mounted state, a first contact surface (68) of a piston (60), wherein the first protrusion (90A, 90B) is azimuthally arranged such that the protrusion defines a local maximum of the width of the bushing (40, 40A, 40B) within an azimuthal angular range, the bushing having a constant minimal width in the azimuthal angular range, except for the protrusion.

2. The bushing (40, 40A, 40B) of claim 1, further comprising:
a second bushing end surface (44) at a second axial end of the bushing (40, 40A, 40B) being opposite to the first axial end,
the second bushing end surface (44) forming at least one protrusion (90A, 90B) extending in the direction of the middle axis and defining a contact region at the second axial end of the bushing (40, 40A, 40B) adapted for contacting, in the mounted state, a second contact surface (69) of a piston (60).

3. The bushing (40, 40A, 40B) of any one of the preceding claims, further comprising at least one lubrication groove (47) extending in a radial direction on the first bushing end surface (43) and/or the second bushing end surface (44).

4. The bushing (40, 40A, 40B) of any one of the preceding claims, wherein the width of the bushing (40, 40A, 40B) is constant or varies at least partially along the circumference of the bushing (40, 40A, 40B).

5. The bushing (40, 40A, 40B) of any one of claims 1 to 4, wherein at least one of the protrusions (90A, 90B, 91 A, 91 B) extends over an angular range of less than 180°.

6. The bushing (40, 40A, 40B) of any one of claims 1 to 5, wherein at least one of the protrusions (90A, 90B, 91 A, 91 B) protrudes from an assumed surface (43', 44', 68', 69') not having the protrusion (90A, 90B, 91 A, 91B) for at least 50 µm.

7. The bushing (40, 40A, 40B) of any one of claims 1 to 6, wherein at least one of the protrusions (90A, 90B, 91 A, 91B) protrudes from the assumed surface (43', 44', 68', 69') not having the protrusion (90A, 90B, 91A, 91 B) for less than 100 µm.

8. The bushing (40, 40A, 40B) of any one of claims 1 to 7, wherein at least one of the protrusions (90A, 91 A) has a curved shape.

9. The bushing (40, 40A, 40B) of any one of claims 1 to 8, wherein at least one of the protrusions (90B, 91B) has an angled shape, e.g. an angle of at least 30°, 60°, 90°, 120° or 150°.

10. The bushing (40, 40A, 40B) of any one of claims 1 to 9, wherein at least one of the protrusions (90A, 90B, 91 A, 91B) has a coating, such as a galvanic coating or a plastic-based coating.

11. A connecting rod-piston system of a combustion engine,
the connecting rod-piston system comprising:
at least one pair of opposing surfaces (43, 68; 44, 69), whereby one of the opposing surfaces (43, 68; 44, 69) is a surface of the connecting rod (100) or a small end bushing (40, 40A, 40B) being disposed in a small end eye (31) of the connecting rod (100) and the other one is a surface of a piston (60, 60A, 60B) mounted to the connecting rod (100), **characterised by**
one of the surfaces of the connecting rod (100) and the small end bushing (43, 44) forming at least one protrusion (90A, 90B, 91 A, 91B) adapted for defining a contact region between the connecting rod (100) or the small end bushing (40, 40A, 40B) and the piston (60, 60A, 60B), wherein the at least one protrusion (90A, 90B, 91A, 91B) is azimuthally arranged such that the protrusion defines a local maximum of the width of the connecting rod (100) or the bushing (40, 40A, 40B) within an azimuthal angular range, the small end of the connecting rod or the bushing having a constant minimal width in the azimuthal angular range, except for the protrusion.

12. The connecting rod-piston system of claim 11, wherein the bushing (40, 40A, 40B) is configured according to any one of claims 1 to 10.

## Patentansprüche

1. Buchse (40, 40A, 40B) mit einer Mittelachse und dazu ausgebildet, in einer axialen Richtung in eine kleine Endöse (31) einer Pleuelstange (100) eingesetzt zu werden, die Buchse (40, 40A, 40B) umfassend:
eine erste Buchsenendfläche (43) an einem ersten axialen Ende der Buchse (40, 40A, 40B), **dadurch gekennzeichnet, dass**
die erste Buchsenendfläche (43) zumindest einen Vorsprung (90A, 90B) bildet, der sich in der Richtung der Mittelachse erstreckt und einen Kontaktbereich an dem ersten axialen Ende der Buchse (40, 40A, 40B) definiert, der dazu ausgebildet ist, in einem montierten Zustand, eine erste Kontaktoberfläche (68) eines Kolbens (60) zu kontaktieren, wobei der erste Vorsprung (90A, 90B) azimutal angeordnet ist, sodass der Vorsprung ein lokales Maximum der Breite der Buchse (40, 40A, 40B) innerhalb eines azimutalen Winkelbereichs definiert, die Buchse aufweisend eine konstante minimale Breite in dem azimutalen Winkelbereich, mit Ausnahme des Vorsprungs.

2. Buchse (40, 40A, 40B) nach Anspruch 1, weiterhin umfassend:
eine zweite Buchsenendfläche (44) an einem zweiten axialen Ende der Buchse (40, 40A, 40B), das dem an einem ersten axialen Ende gegenüberliegt, wobei
die zweite Buchsenendfläche (44) zumindest einen Vorsprung (90A, 90B) bildet, der sich in der Richtung der Mittelachse erstreckt und einen Kontaktbereich an dem zweiten axialen Ende der Buchse (40, 40A, 40B) definiert, der dazu ausgebildet ist, in dem montierten Zustand, eine zweite Kontaktoberfläche (69) eines Kolbens (60) zu kontaktieren.

3. Buchse (40, 40A, 40B) nach einem der vorhergehenden Ansprüche, weiterhin umfassend zumindest eine Schmiernut (47), die sich in einer radialen Richtung auf der ersten Buchsenendfläche (43) und/oder der zweiten Buchsenendfläche (44) erstreckt.

4. Buchse (40, 40A, 40B) nach einem der vorhergehenden Ansprüche, wobei die Breite der Buchse (40, 40A, 40B) zumindest teilweise entlang des Umfangs der Buchse (40, 40A, 40B) konstant ist oder variiert.

5. Buchse (40, 40A, 40B) nach einem der Ansprüche 1 bis 4, wobei sich zumindest einer der Vorsprünge (90A, 90B, 91A, 91B) über einen Winkelbereich von kleiner als 180º erstreckt.

6. Buchse (40, 40A, 40B) nach einem der Ansprüche 1 bis 5, wobei zumindest einer der Vorsprünge (90A, 90B, 91A, 91B) von einer angenommenen Oberfläche (43', 44', 68', 69'), die den Vorsprung (90A, 90B, 91A, 91B) nicht aufweist, für zumindest 50 µm vorsteht.

7. Buchse (40, 40A, 40B) nach einem der Ansprüche 1 bis 6, wobei zumindest einer der Vorsprünge (90A, 90B, 91A, 91B) von einer angenommenen Oberfläche (43', 44', 68', 69'), die den Vorsprung (90A, 90B, 91A, 91B) nicht aufweist, für weniger als 100 µm vorsteht.

8. Buchse (40, 40A, 40B) nach einem der Ansprüche 1 bis 7, wobei zumindest einer der Vorsprünge (90A, 91A) eine gekrümmte Form aufweist.

9. Buchse (40, 40A, 40B) nach einem der Ansprüche 1 bis 8, wobei zumindest einer der Vorsprünge (90B, 91B) eine gewinkelte Form aufweist, z.B. einen Winkel von zumindest 30°, 60°, 90°, 120° oder 150°.

10. Buchse (40, 40A, 40B) nach einem der Ansprüche 1 bis 9, wobei zumindest einer der Vorsprünge (90A, 90B, 91A, 91B) eine Beschichtung aufweist, wie beispielsweise eine galvanische Beschichtung oder eine kunststoffbasierende Beschichtung.

11. Pleuelstangen-Kolben-System eines Verbrennungsmotors, das Pleuelstangen-Kolben-System umfassend:
zumindest ein Paar von gegenüberliegenden Oberflächen (43, 68; 44, 69), wobei eine der gegenüberliegenden Oberflächen (43, 68; 44, 69) eine Oberfläche der Pleuelstange (100) oder einer kleinen Endbuchse (40, 40A, 40B), die in eine kleine Endöse (31) der Pleuelstange (100) eingesetzt ist, ist und die andere eine Oberfläche eines Kolbens (60, 60A, 60B) ist, der an der Pleuelstange (100) befestigt ist, **dadurch gekennzeichnet, dass**
eine der Oberflächen der Pleuelstange (100) und der kleinen Endbuchse (43, 44) zumindest einen Vorsprung (90A, 90B, 91A, 91B) bilden, der dazu ausgebildet ist, einen Kontaktbereich zwischen der Pleuelstange (100) oder der kleinen Endbuchse (40, 40A, 40B) und dem Kolben (60, 60A, 60B) zu definieren, wobei der zumindest eine Vorsprung (90A, 90B, 91A, 91B) azimutal angeordnet ist, sodass der Vorsprung ein lokales Maximum der Breite der Pleuelstange (100) oder der Buchse (40, 40A, 40B) innerhalb eines azimutalen Winkelbereichs definiert, das kleine Ende der Pleuelstange oder die Buchse aufweisend eine konstante minimale Breite in dem azimutalen Winkelbereich, mit Ausnahme des Vorsprungs.

12. Pleuelstange-Kolben-System nach Anspruch 11, wobei die Buchse (40, 40A, 40B) nach einem der Ansprüche 1 bis 10 ausgebildet ist.

## Revendications

1. Bague de palier (40, 40A, 40B) ayant un axe médian et conçue pour être insérée dans une direction axiale dans un petit oeil d'extrémité (31) d'une bielle (100), la bague de palier (40, 40A, 40B) comprenant :
une première surface d'extrémité de bague de palier (43) au niveau d'une première extrémité axiale de la bague de palier (40, 40A, 40B), **caractérisée par**
la première surface d'extrémité de bague de palier (43) formant au moins une protubérance (90A, 90B) s'étendant dans la direction de l'axe médian et définissant une région de contact au niveau de la première extrémité axiale de la bague de palier (40, 40A, 40B) conçue pour entrer en contact, dans l'état monté, avec une première surface de contact (68) d'un piston (60), dans laquelle la première protubérance (90A, 90B) est agencée de manière azimutale de sorte que la protubérance définit un maximum local de la largeur de la bague de palier (40, 40A, 40B) à l'intérieur d'une plage angulaire azimutale, la bague de palier ayant une largeur minimale constante dans la plage angulaire azimutale, à part la protubérance.

2. Bague de palier (40, 40A, 40B) selon la revendication 1, comprenant en outre :
une seconde surface d'extrémité de bague de palier (44) au niveau d'une seconde extrémité axiale de la bague de palier (40, 40A, 40B) opposée à la première extrémité axiale,
la seconde surface d'extrémité de bague de palier (44) formant au moins une protubérance (90A, 90B) s'étendant dans la direction de l'axe médian et définissant une région de contact au niveau de la seconde extrémité axiale de la bague de palier (40, 40A, 40B) conçue pour entrer en contact, dans l'état monté, avec une seconde surface de contact (69) d'un piston (60).

3. Bague de palier (40, 40A, 40B) selon l'une quelconque des revendications précédentes, comprenant en outre au moins une rainure de lubrification (47) s'étendant dans une direction radiale sur la première surface d'extrémité de bague de palier (43) et/ou la seconde surface d'extrémité de bague de palier (44).

4. Bague de palier (40, 40A, 40B) selon l'une quelconque des revendications précédentes, dans laquelle la largeur de la bague de palier (40, 40A, 40B) est constante ou varie au moins partiellement le long de la circonférence de la bague de palier (40, 40A, 40B).

5. Bague de palier (40, 40A, 40B) selon l'une quelconque des revendications 1 à 4, dans laquelle au moins une des protubérances (90A, 90B, 91A, 91B) s'étend sur une plage angulaire de moins de 180°.

6. Bague de palier (40, 40A, 40B) selon l'une quelconque des revendications 1 à 5, dans laquelle au moins une des protubérances (90A, 90B, 91A, 91B) dépasse d'une surface fictive (43', 44', 68', 69') n'ayant pas la protubérance (90A, 90B, 91A, 91B) d'au moins 50 µm.

7. Bague de palier (40, 40A, 40B) selon l'une quelconque des revendications 1 à 6, dans laquelle au moins une des protubérances (90A, 90B, 91A, 91B) dépasse de la surface fictive (43', 44', 68', 69') n'ayant pas la protubérance (90A, 90B, 91A, 91B) de moins de 100 µm.

8. Bague de palier (40, 40A, 40B) selon l'une quelconque des revendications 1 à 7, dans laquelle au moins une des protubérances (90A, 91A) a une forme incurvée.

9. Bague de palier (40, 40A, 40B) selon l'une quelconque des revendications 1 à 8, dans laquelle au moins une des protubérances (90B, 91B) a une forme inclinée, par exemple d'un angle d'au moins 30°, 60°, 90°, 120° ou 150°.

10. Bague de palier (40, 40A, 40B) selon l'une quelconque des revendications 1 à 9, dans laquelle au moins une des protubérances (90A, 90B, 91A, 91B) a un revêtement, comme un revêtement galvanique ou un revêtement à base de plastique.

11. Système piston-bielle d'un moteur à combustion, le système piston-bielle comprenant :
au moins un couple de surfaces opposées (43, 68 ; 44, 69), de sorte qu'une des surfaces opposées (43, 68 ; 44, 69) est une surface de la bielle (100) ou une petite bague de palier d'extrémité (40, 40A, 40B) étant disposée dans un petit oeil d'extrémité (31) de la bielle (100) et l'autre est une surface d'un piston (60, 60A, 60B) monté sur la bielle (100), **caractérisé par**
une des surfaces de la bielle (100) et la petite bague de palier d'extrémité (43, 44) formant au moins une protubérance (90A, 90B, 91A, 91B) conçue pour définir une région de contact entre la bielle (100) ou la petite bague de palier d'extrémité (40, 40A, 40B) et le piston (60, 60A, 60B), dans lequel l'au moins une protubérance (90A, 90B, 91A, 91B) est agencée de manière azimutale de sorte que la protubérance définit un maximum local de la largeur de la bielle (100) ou de la bague de palier (40, 40A, 40B) à l'intérieur d'une plage angulaire azimutale, la petite extrémité de la bielle ou de la bague de palier ayant une largeur minimale constante dans la plage angulaire azimutale, à part la protubérance.

12. Système piston-bielle selon la revendication 11, dans lequel la bague de palier (40, 40A, 40B) est configurée selon l'une quelconque des revendications 1 à 10.
